# EUROPÄISCHE PATENTANMELDUNG

(11) **EP 4 847 228 A1**
(43) Veröffentlichungstag der Anmeldung: **02.12.2026**
(21) Anmeldenummer: 25179371.7
(22) Anmeldetag: 28.05.2025
(51) Int. Cl.: B29C 45/14, B29C 51/18, B29C 51/26, B29C 51/02, B29K 23/00, B29K 27/06, B29K 69/00, B29L 31/30

(54) **VERFAHREN ZU HERSTELLUNG EINES FALTENFREIEN, DREIDIMENSIONALEN BAUTEILS**

(71) Anmelder: Covestro Deutschland AG, 51373 Leverkusen (DE)
(72) Erfinder: Kuenzel, Roland, 51381 Leverkusen (DE)
(74) Vertreter: Levpat

(57) **Zusammenfassung**

Die Erfindung betrifft ein Verfahren zur Herstellung eines dreidimensionalen Bauteils, wobei zunächst ein zweidimensionaler Folienzuschnitt in einem Verformungswerkzeuges VW teilverformt wird, unter Erhalt eines Vorläufers, der mittels eines Hinter- und/oder Überspritzen eines Polymers in seine endgültige Bauteilform gebracht werden kann.

## Beschreibung

Die vorliegende Erfindung betrifft ein Verfahren zur Herstellung eines dreidimensionalen Bauteils, wobei zunächst ein 2D Folienzuschnitt in einem Verformungswerkzeuges VW teilverformt wird, unter Erhalt eines Vorläufers, der mittels eines Hinter- und/oder Überspritzen eines Polymers in seine endgültige Bauteilform gebracht werden kann.

Aus dem Stand der Technik sind verschiedene Verfahren zur Herstellung von dreidimensionalen Bauteilen aus Kunststoff bekannt. Insbesondere bei der Herstellung von Bauteilen mit komplexen dreidimensionalen Geometrien, wie sie beispielsweise bei Fahrzeugteilen oder Sanitärgegenständen vorkommen, werden häufig Verfahren eingesetzt, bei denen zunächst eine Folie tiefgezogen und anschließend hinterspritzt wird.

Aus der DE 195 06 291 A1 ist ein Verfahren zur Herstellung eines muldenförmigen Gegenstandes bekannt, bei dem ein Folienkörper über einen Formkern gestülpt und anschließend mit einer Verstärkungsschicht hinterspritzt wird. Bei diesem bekannten Verfahren wird die Folie zunächst tiefgezogen und anschließend in einem separaten Schritt hinterspritzt.

Ein wesentlicher Nachteil dieses Verfahrens besteht darin, dass die Positionierung der verformten Folie im Spritzgießwerkzeug nicht präzise genug erfolgen kann. Dies führt zu Qualitätsschwankungen am fertigen Bauteil. Außerdem wird beim Tiefziehen immer eine Klemmvorrichtung benötigt, um die Folie während des Tiefziehens in ihrer Position zu halten.

Aus der DE 197 33 598 A1 ist ein weiteres Verfahren bekannt, bei dem eine Kunststofffolie zunächst erwärmt und dann durch Vakuum verformt wird. Auch bei diesem Verfahren treten Probleme bei der Positionierung der Folie auf, was zu Verzug und Maßabweichungen führt.

Aus der DE 10 2007 046 472 A1 ist ein kontaktloses Verfahren zum präzisen Tiefziehen von Polycarbonat oder Polymethymethacrylatfolienzuschnitten bekannt. Hierbei wird der Folienzuschnitt erwärmt und anschließend mit einem fluiden Druckmittel bei hohem Druck isostatisch in die gewünschte Form tiefgezogen. Nachteil dieses Verfahrens ist der hohe apparative Aufwand und die Verwendung eines sehr großen Folienbogens im Vergleich zu dem Bauteil. Dadurch entsteht üblicherweise ein sehr hoher Anteil an überschüssigem Material, welches nicht verwendet werden kann.

Daher lag der Erfindung die Aufgabe zugrunde, ein verbessertes Verfahren zur Herstellung eines Vorläufers für ein dreidimensionales Bauteil bzw. eines dreidimensionalen Bauteils selbst bereitzustellen, das eine präzise Vorverformung der Folie ermöglicht, dabei aber weniger überschüssiges Material erzeugt. Weiterhin war es eine Aufgabe der Erfindung, dass eine präzise Verformung von Folien für große Bauteile ermöglicht wird.

Überraschenderweise wurde gefunden, dass mindestens eine Aufgabe gelöst wurde durch ein Verfahren zur Herstellung eines Vorläufers für ein dreidimensionales Bauteil, umfassend mindestens die folgenden Schritte:
I. Bereitstellen eines optional dekorierten oder funktionalisierten Folienzuschnitts mit einer ersten Oberfläche O1 und einer der ersten Oberfläche O1 gegenüberliegenden zweiten Oberfläche O2, wobei der Folienzuschnitt mindestens eine Positionierungshilfe PH aufweist, bevorzugt in Form einer Lasche, die mindestens ein Loch aufweist;
II. Positionieren des Folienzuschnitts mittels der Positionierungshilfe PH auf eine Fixierungsvorrichtung FV eines beheizbaren Verformungswerkzeugs VW, wobei die Fixierungsvorrichtung FV zwischen einem ersten Werkzeugteil W1 und einem zweiten Werkzeugteil W2 des Verformungswerkzeuges VW angeordnet ist, wobei das erste Werkzeugteil W1 und das zweite Werkzeugteil W2 jeweils eine zum Teil gebogene Oberfläche WO1, WO2 aufweisen, wobei die Oberflächen WO1, WO2 in ihrer Form komplementär zueinander ausgestaltet sind und jeweils zumindest in einem Bereich ihrer gebogenen Oberfläche eine triaxial konvex oder konkav geformte Oberfläche mit mindestens einem Erhebungspunkt aufspannen;
III. Kontaktieren der zweiten Oberfläche O2 des Folienzuschnitts mit der gebogenen Oberfläche WO2 des zweiten beheizbaren Werkzeugteil W2, die eine zur gebogenen Oberfläche WO1 des ersten Werkzeugteils W1 komplementäre konkave oder konvexe Form aufweist, sodass der Folienzuschnitt zwischen den beiden Werkzeugteilen W1 und W2 so eingeklemmt wird, dass er über die gesamte Fläche, die mit den Oberflächen WO1 und WO2 der Werkzeugteile W1 und W2 in Berührung kommt, auf eine Temperatur in einem Bereich ≤ 20°C unterhalb der Vicat-Temperatur des Folienmaterials bis ≤ Glasübergangstemperatur und dabei zum Vorläufer des dreidimensionalen Bauteils verformt wird; und
IV. Entnahme des Vorläufers aus Schritt III. aus dem Verformungswerkzeug VW;
wobei das Verformungswerkzeug VW, insbesondere die Werkzeugteile W1 und W2, derart ausgestaltet ist, dass der Folienzuschnitt bei maximaler Kontaktierung der zweiten Oberfläche WO2 in Schritt III. an mindestens der Hälfte des Umfangs der Außenkanten der Werkzeugteile W1 und W2 in direktem Kontakt mit diesen steht und mindestens an dem mindestens einen Erhebungspunkt zu mindestens einem der Werkzeugteile W1 oder W2 keinen Kontakt hat.

In einem ersten **Schritt I.** des erfindungsgemäßen Verfahrens wird ein Folienzuschnitt mit einer ersten Oberfläche O1 und einer der ersten Oberfläche O1 gegenüberliegenden zweiten Oberfläche O2 bereitgestellt. Der Folienzuschnitt beinhaltet bevorzugt zu mindestens 50 Gew.-% ein Polymer, bevorzugt ausgewählt aus der Gruppe bestehend aus einem Polycarbonat PC, einem Co-Polycarbonat Co-PC, einem Polyester PE, einem Co-Polyester Co-PE, einem Polyurethan, einem Acrylnitril-Butadien-Styrol-Copolymer ABS, einem Polymethylmethacrylat PMMA oder einer Mischung oder einem Blend aus mindestens zwei hiervon. Der Folienzuschnitt kann optional ein oder beidseitig dekoriert oder funktionalisiert sein. Weiterhin weist der Folienzuschnitt mindestens eine Positionierungshilfe PH auf. Diese Positionierungshilfe PH kann jede Gestalt aufweisen, die der Fachmann hierfür auswählen würde, um den Folienzuschnitt möglichst positionsgenau in dem Verformungswerkzeug VW zwischen die Werkzeugteile W1 und W2 zu positionieren, sodass er während des Verformungsprozesses nicht verrutscht. Die Positionierungshilfe PH kann sich an den Rändern oder in der Mitte des Folienzuschnittes befinden. Befindet sich die mindestens eine Positionierungshilfe PH an den Rändern des Folienzuschnittes so ist sie bevorzugt in Form mindestens einer Lasche ausgestaltet, die mindestens ein Loch aufweisen kann. Bevorzugterweise ist die mindestens eine Lasche abtrennbar von dem Folienzuschnitt angeordnet, was bedeuten soll, dass sie bevorzugt nach dem Verformungsprozess bzw. dem Hinterspritzprozess abgetrennt werden kann, ohne, dass der Folienzuschnitt in seiner sonstigen Form und Geometrie verändert wird.

In **Schritt II.** wird der Folienzuschnitt mittels der Positionierungshilfe PH auf eine Fixierungsvorrichtung FV eines beheizbaren Verformungswerkzeugs VW positioniert. Bevorzugt weist die Fixierungsvorrichtung FV eine Form und Ausgestaltung auf, sodass der Folienzuschnitt beim Positionieren mittels der Positionierungshilfe PH die Werkzeugteile W1 und W2 nicht berührt.

Bevorzugt weist die Fixierungsvorrichtung FV mindestens einen Stift, mehr bevorzugt zwei Stifte, weiter bevorzugt drei Stifte, besonders bevorzugt vier Stifte auf, die an einem, zwei, drei oder vier Punkten, bevorzugt auf den Außenflächen des Werkzeugteils W1 mit möglichst großem Abstand angeordnet sind. Handelt es sich bei der FV lediglich um einen Stift, so ist dieser bevorzugt in der Mitte des ersten Werkzeugteils W1 positioniert, damit der Folienzuschnitt darauf positioniert werden kann, ohne weiter gestützt werden zu müssen. In diesem Fall weist der Folienzuschnitt bevorzugt ein Loch zur Positionierung auf.

Bevorzugt ist der mindestens eine Stift in das Werkzeugteil W1 versenkbar ausgestaltet. Bevorzugt weist der mindestens eine Stift eine Feder auf, die bei Druck des zweiten Werkzeugteils W2 auf den mindestens einen Stift zusammengedrückt werden kann und damit der mindestens eine Stift in die Oberfläche des Werkzeugteils W1, möglichst nahtlos, versenkt wird. Unter nahtlos wird verstanden, dass die Geometrie der Stifte so ausgestaltet ist, dass die Stifte eine plane Oberfläche mit dem Rest der Oberfläche des Werkzeugteils W1 bilden. Insbesondere wird durch die versenkten Stifte kein größerer Druck auf den Folienzuschnitt ausgeübt als über den Rest des Werkzeugteils W1. Die Form des mindestens einen Stiftes ist bevorzugt so genau an die Form der Positionierungshilfe PH des Folienzuschnittes angepasst, dass der Folienzuschnitt so auf die PH angeordnet werden kann, dass er in seiner vertikalen und horizontalen Ausrichtung auf weniger als 0,1 mm, bevorzugt auf weniger als 0,05 mm, besonders bevorzugt auf weniger als 0,01 mm in jede Raumrichtung (x, y, z) fixiert ist. Aufgrund des Abstandes der mindestens einen Fixierungsvorrichtung FV zu der Oberfläche O1 des Werkzeugteils W1 berührt der Folienzuschnitt in einem Grundzustand des Verformungswerkzeugs VW bevorzugt keines der Werkzeugteile W1 oder W2. Der Grundzustand des Verformungswerkzeugs VW ist dadurch charakterisiert, dass die Fixierungsvorrichtung FV ausgefahrene Stifte aufweist und die Werkzeugteile W1 und W2 maximalen Abstand zueinander haben, sodass der Folienzuschnitt optimal auf der Fixierungsvorrichtung FV positioniert werden kann. In einem zweiten Zustand des VW, dem Arbeitszustand, sind die beiden Werkzeugteile W1 und W2 maximal aufeinandergedrückt.

Wird mehr als ein Stift als Fixierungsvorrichtung FV an oder auf dem Werkzeugteil W1 verwendet, so können diese Stifte so angeordnet sein, dass der Folienzuschnitt bei seiner Positionierung auf den Stiften eine Vorspannung in mindestens eine Ausdehnungsrichtung x, y oder z erfährt.

Der Folienzuschnitt weist vor Schritt I. eine grundsätzlich plane Geometrie auf, wie sie für extrudierte, gegossene oder laminierte Folien üblich ist. Die Dicke des Folienzuschnitts liegt vorzugsweise in einem Bereich von 30 bis 1000 µm. Die Dickenabweichung des Folienzuschnitts beträgt bevorzugt ≤ 5 µm, mehr bevorzugt ≤ 3 µm, besonders bevorzugt ≤ 1 µm. Bevorzugt weist der Folienzuschnitt eine Länge in einem Bereich von 1 bis 500 cm, mehr bevorzugt von 2 bis 400 cm, besonders bevorzugt von 5 bis 300 cm, ganz besonders bevorzugt von 10 bis 200 cm auf. Bevorzugt weist der Folienzuschnitt eine Breite in einem Bereich von 1 bis 500 cm, mehr bevorzugt von 2 bis 400 cm, besonders bevorzugt von 5 bis 300 cm, ganz besonders bevorzugt von 10 bis 200 cm auf. Bevorzugt weist der Folienzuschnitt eine Fläche in einem Bereich von 1 cm² bis 25 m², mehr bevorzugt von 4 cm² bis 16 m², besonders bevorzugt von 5 cm² bis 9 m², ganz besonders bevorzugt von 25 cm² bis 2 m² auf.

Die Werkzeugteile W1 und W2 weisen bevorzugt eine glatte Oberfläche OW1 und OW2 auf. Bevorzugt ist die Fläche der Oberfläche der OW1 und OW2 größer als der des Folienzuschnitts, sodass der Folienzuschnitt in den Randbereichen nicht geknickt wird und damit keinem zusätzlichen Stress ausgesetzt wird. Bevorzugt ist mindestens die Oberfläche OW1 und OW2 aus einem Metall gebildet, bevorzugt ausgewählt aus der Gruppe bestehend aus Aluminium, Messing, Stahl, bevorzugt aus Aluminium oder Stahl, besonders bevorzugt aus Stahl.

Das Verformungswerkzeug VW umfasst ein erstes Werkzeugteil W1 und ein zweites Werkzeugteil W2, zwischen denen mindestens eine Fixierungsvorrichtung FV angeordnet ist. Die Fixierungsvorrichtung FV weist entsprechende Aufnahmen für die Positionierungshilfen auf, wodurch eine definierte Lagebestimmung des Folienzuschnitts gewährleistet wird.

Die Werkzeugteile W1 und W2 weisen jeweils eine zum Teil gebogene Oberfläche WO1, WO2 auf, die in ihrer Form komplementär zueinander ausgestaltet sind. Bevorzugt sind die Oberflächen WO1 und WO2 glatt ausgestaltet. Bevorzugt sind die Oberflächen WO1, WO2 so ausgestaltet, dass sie die Oberflächenrauigkeit des Folienzuschnitts während des Verform-Prozesses nicht verändern oder erniedrigen.

Eine besondere Eigenschaft der Werkzeuggeometrie besteht darin, dass die sich zugewandten Oberflächen WO1, WO2 jeweils zumindest in einem Bereich ihrer gebogenen Oberfläche eine triaxial konvex oder konkav geformte Oberfläche mit mindestens einem Erhebungspunkt aufspannen. Unter triaxial konvex oder konkav wird verstanden, dass sich mindestens ein Punkt der Oberfläche eines der Werkzeuge W1 und/oder W2 nicht in der gleichen Ebene befinden wie alle anderen Punkte der Oberfläche der Werkzeugteile W1 und/oder W2. Dieser Punkt stellt bevorzugt den maximalen Erhebungspunkt des Folienzuschnitts gegenüber einer gedachten Ebene, die von den Rändern des Folienzuschnitts gebildet wird, denn der verformte Folienzuschnitt mit seinen Rändern auf den Boden gelegt wird. Dabei kann die Kontur des Werkzeugteils W1 auch teilweise kurvenförmig, beispielsweise teilweise S-förmig, verlaufen und nur einen Teil einer konvexen oder konkaven Struktur aufweisen. Weiterhin kann die Kontur mehr als einen Erhebungspunkt aufweisen. Dann ist jeder Erhebungspunkt in seiner Ausprägung separat zu betrachten. Als gedachte Ebene fungiert dann zum Einen ein Rand auf der einen Seite und zum anderen der Übergang der einen konvexen Linie in eine konkave Linie. Gibt es Erhebungspunkte, die nicht von einem Rand des Folienzuschnitts begrenzt werden, so bilden alle Punkte, die einen Wechsel von konvex zu konkaver Struktur bilden, die Punkte der gedachten Ebene. Hierauf sind im Folgenden alle Bezüge zur Ermittlung des mindestens einen Erhebungspunktes zu lesen, wenn nicht anders beschrieben.

Die Kontur bzw. die Oberfläche des Werkzeugteils W2, die dem Werkzeugteil W1 zugewandt ist, folgt der Kontur des W1 grundsätzlich, bis auf mindestens einen kleinen Spalt, der sich am mindestens einen Erhebungspunkt bildet, wenn die beiden Werkzeugteile W1 und W2 funktionsgemäß beim Verformungsprozess überlagern. Die Größe des Spalts zwischen Werkzeugteil W1 und W2 am Erhebungspunkt wird an der Stelle ermittelt, an dem die Werkzeugteile W1 und W2 ihren maximalen Abstand aufweisen, unabhängig von ihrer räumlichen Lage im Verformungswerkzeugs VW.

Der mindestens eine Erhebungspunkt befindet sich mindestens an einem maximalen Auslenkungspunkt der konkaven oder konvexen Form der Werkzeugteile W1 bzw. W2.

In **Schritt III.** des erfindungsgemäßen Verfahrens erfolgt die Kontaktieren der zweiten Oberfläche O2 des Folienzuschnitts mit dem zweiten beheizbaren Werkzeugteil W2. Das Werkzeugteil W2 weist eine zum ersten Werkzeugteil W1 komplementäre konkave oder konvexe Form auf, sodass der Folienzuschnitt zwischen den beiden Werkzeugteilen W1 und W2 so eingeklemmt wird, dass er über die gesamte Fläche, die mit dem Werkzeugteil W1 oder W2 in Berührung kommt, auf eine Temperatur in einem Bereich von ≤ 20°C unterhalb der Vicat-Temperatur des Folienmaterials bis ≤ Glasübergangstemperatur des Folienmaterials, bevorzugt innerhalb von 1 bis 60 Sekunden, bevorzugt von 2 bis 50 Sekunden, besonders bevorzugt von 5 bis 30 Sekunden erwärmt und dabei zum Vorläufer des dreidimensionalen Bauteils verformt wird. Nach der Verweilzeit zwischen den maximal zusammen gedrückten Werkzeugteilen W1 und W2 für eine, bevorzugt frei gewählte Zeit, wird das Verformungswerkzeug VW wieder in seinen Grundzustand gebracht und der Folienzuschnitt wird bei Umgebungstemperatur, bevorzugt bei einer Temperatur zwischen 15 und 30 °C abkühlen gelassen. Dabei stellt sich der Folienzuschnitt zu einem Teil wieder in seine Ausgangsform zurück, was im Folgenden als Rückstellung bezeichnet wird. Dieser Abkühlungsvorgang beträgt bevorzugt zwischen 5 und 60 Sekunden, bevorzugt zwischen 10 und 50 Sekunden, besonders bevorzugt zwischen 20 uns 40 Sekunden. Um eine schnellere Abkühlung zu gewährleisten kann der Folienzuschnitt zusätzlich durch ein kaltes Fluid, wie gekühlte Luft, beströmt werden.

Das Verformungswerkzeug VW ist derart ausgestaltet ist, dass der Folienzuschnitt bei maximaler Kontaktierung der zweiten Oberfläche O2 in Schritt III. an mindestens der Hälfte des Umfangs der Außenkanten der Werkzeugteile W1 und W2 in direktem Kontakt mit diesen steht und mindestens an dem mindestens einen Erhebungspunkt zu mindestens einem der Werkzeugteile W1 oder W2 keinen Kontakt hat.

In **Schritt IV.** des erfindungsgemäßen Verfahrens wird der Vorläufer des dreidimensionalen Bauteils aus dem Verformungswerkzeug VW entnommen, was auch als entformen bezeichnet wird.

Der teilgeformte Folienzuschnitt ist als Vorläufer eines dreidimensionalen Bauteils für verschiedene weitere Verformungsschritte und/oder Dekorierungsschritte, bevorzugt ausgewählt aus der Film-Insert-Molding (FIM) Technologie, dem Hintergießen, dem Hinter- oder Überschäumen oder einer Kombination aus mindestens zwei davon, geeignet. Der Folienzuschnitt kann ein Dekor, aufgebracht beispielsweise mittels Siebdrucks, Tiefdrucks, Digitaldrucks oder anderen Dekorierungsmethoden und/oder Funktionalität, wie ein Heizdraht, aufweisen. Diese Dekorations- bzw. Funktionalisierungsvorgänge finden in der Regel im 2-dimensionalen Zustand, also bevorzugt vor dem erfindungsgemäßen Prozess statt.

Vor der eigentlichen Verformung sollte daher die Folie den Zuschnitt des herzustellenden Bauteils bereits erhalten, da kein Dichtungsmaterial/Klemmmaterial wie beim Thermoformen/High Pressure Formen aus dem Stand der Technik, wie oben beschrieben benötigt wird.

Die Verformung findet möglichst nahe der Vicat Temperatur statt, da es von Vorteil ist, wenn die Folie während des Prozesses ausreichend steif bleibt, dass die Folie stabil entformt werden kann und eine präzise Rückstellung des Folienzuschnitts beim Entnehmen aus dem Verformungswerkzeugs VW begünstigt wird.

Bevorzugt weist das Polymer, aus dem der Folienzuschnitt geformt ist, eine Härte in einem Bereich von 90 Shore A bis 90 Shore D auf. Weiterhin bevorzugt weist der Folienzuschnitt mindestens auf einer Oberfläche O1 oder O2 eine Rauigkeit. gemessen in Anlehnung an ISO 4288:1996, in einem Bereich von 2 µm bis 30 µm, bevorzugt in einem Bereich von 3 µm bis 25 µm, besonders bevorzugt in einem Bereich von 5 µm bis 20 µm auf. Bevorzugt weist die Oberfläche O1 eine niedrigere Rauigkeit, bevorzugt eine um 5 bis 10 µm, besonders bevorzugt um 6 bis 8 µm niedrigere Rauigkeit auf als die Oberfläche O2.

In einer bevorzugten Ausführungsform des Verfahrens befindet sich mindestens an dem mindestens einen Erhebungspunkt zwischen dem ersten Werkzeugteil W1 und dem zweiten Werkzeugteil W2 ein Spalt von 0,05 bis 0,5 mm, bevorzugt von 0,07 bis 0,3 mm, besonders bevorzugt von 0,09 bis 0,1 mm, wenn die beiden Werkzeugteile W1 und W2 funktionsgemäß aufeinandergelegt werden.

Unter "funktionsgemäß aufeinandergelegt" wird verstanden, dass die Werkzeugteile W1 und W2 so übereinander positioniert werden, wie sie in dem Verformungswerkzeugs VW zur Verformung des Folienzuschnitts vorgesehen sind. Die Positionierung der Werkzeugteile W1 und W2 können dabei durch jedes Mittel bewegt werden, das der Fachmann hierfür vorsehen würde. Bei ausreichendem Gewicht des oberen Werkzeugteils, bevorzugt des Werkzeugteils W2, kann das Werkzeugteil W2 per Hand auf das Werkzeugteil W1 gelegt werden. Bevorzugt werden die Werkzeugteile W1 und W2 mittels eines Motors aufeinander zu bewegt. Besonders bevorzugt wird mindestens ein Servomotor zur Bewegung mindestens eines der Werkzeugteile W1 und/oder W2 verwendet.

Bevorzugt wird das zweite Werkzeugteil W2 beim Kontaktieren mit dem ersten Werkzeugteile W1 in Schritt III. mit einer Kraft von 2 bis 50 N/m², bevorzugt 3 bis 40 N/m², besonders bevorzugt 5 bis 25 N/m² auf das erste Werkzeugteil W1 gedrückt. Diese Kraft wird bevorzugt per Hand, mittels Gewichten, mittels Hydraulik, mittels Druckluft oder mittels eines Motors, beispielsweise eines Servomotors aufgebracht.

Weist die Oberflächenkontur der Werkzeugteile W1 und W2 mehr als ein Maximum in ihrem Oberflächenverlauf auf, so können zwischen dem Werkzeugteil W1 und W2 an beiden maximal ausgelenkten Punkten, also beiden Erhebungspunkten, jeweils ein Spalt ausgebildet sein. Dabei kann der Spalt des zweiten Erhebungspunktes unterschiedlich in seiner Abmessung verglichen mit dem Spalt an dem ersten Erhebungspunkt sein. Bevorzugt ist der zweite Spalt ebenfalls in einer Dimension von 0,05 bis 0,5 mm, bevorzugt von 0,07 bis 0,3 mm, besonders bevorzugt von 0,09 bis 0,1 mm, wenn die beiden Werkzeugteile W1 und W2 funktionsgemäß aufeinandergelegt bzw. gepresst werden.

In einer bevorzugten Ausführungsform des Verfahrens weist das Werkzeugteil W1 die gleiche Oberflächenkrümmung auf wie das dreidimensionale Bauteil, wobei der Vorläufer des dreidimensionalen Bauteils nach Entnahme des Vorläufers aus dem Verformungswerkzeugs VW in Schritt IV. und abkühlen auf Raumtemperatur, bevorzugt in einem Bereich von 15 bis 30 °C, eine Rückstellung in Richtung seiner ursprünglichen Form vor Schritt I. um einen Betrag in einem Bereich von 5 bis 30 %, bevorzugt von 7 bis 25 %, besonders bevorzugt von 10 bis 20 %, bezogen auf die Geometrie des Werkzeugteils W1, insbesondere bezogen auf die Neigung der Fläche der Außenkanten des Werkzeugteils W1 mit der größten Neigung. Die Rückstellung des Folienzuschnitts bezieht sich folglich auf die Veränderung der Auslenkung der Abschnitte des Folienzuschnitts, die jenseits des Erhebungspunktes liegen. Weist die Oberfläche des Werkzeugteils W1 beispielsweise eine Erhebung um 6 mm vom tiefsten Punkt im Randbereich zum Erhebungspunkt auf, so wird der zweidimensionale Folienzuschnitt in Schritt III. des erfindungsgemäßen Verfahrens in die Geometrie des Werkzeugteils W1 gezwungen, was bevorzugt der Geometrie des dreidimensionalen Bauteils entspricht, und nach Schritt IV. biegen sich die Randbereiche mit der größten Neigung um 0,3 bis 2 mm, bevorzugt 0,4 bis 1,7, besonders bevorzugt 0,6 bis 1,2 mm gegenüber dem Erhebungspunkt zurück in die ursprüngliche zweidimensionale Form des Folienzuschnitts.

Die Rückstellung der Folie kann bevorzugt durch die kurze Erwärmung des Folienzuschnitts auf nicht mehr als wenige °C, bevorzugt nicht mehr als 1 bis 10°C, besonders bevorzugt nicht mehr als 2 bis 5°C über oder unter der Vicat-Temperatur erreicht werden. Durch die kurze Verweilzeit und die gemäßigten Temperaturen kann erreicht werden, dass keine Faltenbildung insbesondere im Randbereich des Folienzuschnittes entsteht.

Wie bereits zuvor beschrieben, kann das herzustellende dreidimensionale Bauteil und damit auch das Werkzeugteil W1 mehr als einen Erhebungspunkt aufweisen. Um den Folienzuschnitt jedoch nicht übermäßig Spannungen auszusetzen, weist bevorzugt jede Neigung der Oberfläche OW1 des Werkzeugteils W1 gegenüber der über ihr in Schritt II. positionierten Folienzuschnittes einen Winkel von ≤ 90°, bevorzugt von ≤ 80°, mehr bevorzugt von ≤ 70°, besonders bevorzugt von ≤ 60° auf. Das bedeutet, dass der Folienzuschnitt an keiner Stelle während des Verformungsprozesses ≥ 100°, bevorzugt von ≥ 85°, besonders bevorzugt von ≥ 70° gebogen wird.

Weist das dreidimensionale Bauteil eine Geometrie mit zwei Außenkanten in einer Ebene auf, so wird der mindestens eine Erhebungspunkt von dieser Ebene aus ermittelt.

Der mindestens eine Erhebungspunkt weist gegenüber der Ebene, die von mindestens zwei Außenkanten des Werkzeugteils W1 aufgespannt wird, bevorzugt einen Abstand von mindestens 1/200, bevorzugt 1/150, besonders bevorzugt 1/100, ganz besonders bevorzugt 1/50 oder in einem Bereich von 1/500 bis 1/10 des Umfangs des Folienzuschnitts auf. Bevorzugt wird die Ebene von den zwei niedrigsten Außenkanten des Werkzeugteils W1 aufgespannt. Bevorzugt liegen sich die beiden Außenkanten gegenüber.

In einer bevorzugten Ausführungsform des Verfahrens erhebt sich der mindestens eine Erhebungspunkt in einem Bereich von 1 mm bis 50 mm, von 2 bis 40 mm, mehr bevorzugt von 3 bis 30 mm, besonders bevorzugt von 4 bis 20 mm gegenüber dem niedrigsten Punkt, den das dreidimensionale Bauteil aufweist, wenn es mit seinen Außenkanten flach auf den Boden gelegt wird.

Das Werkzeugteil W2 kann mittels jedem Mittel auf das Werkzeugteil W1 bewegt werden. Bevorzugt wird das Werkzeugteil W2 mittels eines Motors, hydraulisch oder pneumatisch auf das Werkzeugteil W1 zubewegt.

In einer bevorzugten Ausführungsform des Verfahrens wird das Werkzeugteil W2 mittels eines Servomotors mit dem Folienzuschnitt, zumindest im Außenbereich in Kontakt gebracht.

Bei der Bewegung des Werkzeugteils W2 auf das Werkzeugteil W1 zu wird langsam die Fixierungsvorrichtung FV, bevorzugt in Form mindestens eines Stiftes, in das Werkzeugteil W1 versenkt.

In einer bevorzugten Ausführungsform des Verfahrens weist die Fixierungsvorrichtung FV mindestens zwei Stifte, bevorzugt drei Stifte, besonders bevorzugt vier Stifte auf, die an zwei, drei oder vier Punkten auf den Außenflächen des Werkzeugteils W1 mit möglichst großem Abstand angeordnet sind. Der Abstand der Stifte wird möglichst so gewählt, dass der Folienzuschnitt ohne weitere Stütze oberhalb des Werkzeugteils W1 gehalten wird und in seiner Position so fixiert wird, dass er bei Berührung mit den Werkzeugteilen W1 und W2 nicht aus seiner gewünschten Position verrutscht.

In einer bevorzugten Ausführungsform des Verfahrens weist der Folienzuschnitt im Arbeitszustand des Verformungswerkzeugs VW und später im Bauteil mindestens auf einer Seite des Folienzuschnitts eine Neigung ausgehend vom Rand bis zum mindestens einen Erhebungspunkt in einem Bereich von 5 bis 30°, bevorzugt von 7 bis 25°, besonders bevorzugt von 10 bis 20° auf. Ist der mindestens einen Erhebungspunkt von keinem Rand umgeben, sondern von weiteren Erhebungspunkten, so bilden die Punkte im Übergang von konvex zu konkaver Struktur die Linie zur Berechnung der Neigung und bilden den tiefsten Punkt von dem aus sich der Erhebungspunkt erstreckt.

In einer bevorzugten Ausführungsform des Verfahrens weisen die Außenkanten des Werkzeugteils W1 und bevorzugt auch des Werkzeugteils W2 eine Form auf ausgewählt aus der Gruppe bestehend aus einem Kreis, einem Oval, einem Parallelogramm oder einer Kombination aus mindestens zwei hiervon. Der Form des Bauteils bzw. dessen Vorläufers sind keine Grenzen gesetzt. Das Bauteil kann jede Form annehmen, die der Fachmann für den Zweck der Verformung eines Folienzuschnitts auswählen würde. Vor allem die Biegefähigkeit des Folienzuschnitts bildet das Limit für kurvenförmige Umgestaltungen dessen Oberflächen.

Bevorzugt weist das dreidimensionale Bauteil, dessen Vorläufer und damit auch das Werkzeugteil W1 und W2 eine Form eines Parallelogramms auf.

In einer bevorzugten Ausführungsform des Verfahrens wird der geformte Folienzuschnitt mindestens von einer Seite mit einem Kunststoff hinter- und/oder überspritzt, unter Erhalt des dreidimensionalen Bauteils.

Bevorzugt wird der Folienzuschnitt mit einer Zusammensetzung einer Polymermischung hinter- und/oder überspritzt, die zumindest zum Teil ein gleiches Polymer umfasst, wie der Folienzuschnitt selbst.

Bevorzugt ist der Kunststoff zum Hinter- und/oder Überspritzen ausgewählt aus der Gruppe bestehend aus einem Polycarbonat PC, einem Co-Polycarbonat Co-PC, einem Polyester PE, einem Co-Polyester Co-PE, einem Polyurethan, einem Acrylnitril-Butadien-Styrol-Copolymer ABS, einem Polymethylmethacrylat PMMA oder einer Mischung oder einem Blend aus mindestens zwei hiervon. Dem Kunststoff zum Hinter-und/oder Überspritzen können die üblichen Additive für UV-Schutz, Entformen, Einfärben, Stabilisieren oder sonstigen Eigenschaften zugesetzt sein.

Vor oder nach dem Hinter- oder Überspritzvorgang kann die Positionierungshilfe PH von dem Folienzuschnitt abgetrennt werden.

In einer bevorzugten Ausführungsform des Verfahrens wird während des Hinter- oder Überspritzvorgangs der Folienzuschnitt mit seiner mindestens einen Positionierungshilfe PH in oder an der Form eines Spritzguss Werkzeugs fixiert.

Bevorzugt wird die Positionierungshilfe PH von dem Folienzuschnitt spätestens nach dem Hinter- oder Überspritzvorgang abgetrennt.

In einer bevorzugten Ausführungsform des Verfahrens weisen die Werkzeugteile W1 und W2 eine Oberfläche mit einer Prägung auf. Hierdurch können zusätzliche Funktionalitäten oder dekorative Elemente in das Bauteil eingebracht werden. Durch die Prägung kann ein Motiv in den Folienzuschnitt eingeprägt werden, dass selbst nach dem Hinter- oder Überspritzvorgang noch zu erkennen ist.

In einer bevorzugten Ausführungsform des Verfahrens enthält der Folienzuschnitt ein Material, das zu mindestens 50 Gew.-%, bevorzugt zu mindestens 70 Gew.-%, besonders bevorzugt zu mindestens 90 Gew.-% ein Polymer ist, ausgewählt aus der Gruppe bestehend aus einem Polycarbonat PC, einem Co-Polycarbonat Co-PC, einem Polyester PE, einem Co-Polyester Co-PE, einem Polyurethan, einem Acrylnitril-Butadien-Styrol-Copolymer ABS, einem Polymethylmethacrylat PMMA oder einer Mischung oder einem Blend aus mindestens zwei hiervon.

Dem Material des Folienzuschnitts können Additive wie UV-Stabilisatoren, Pigmente, Farbstoffe, Entformungsmittel, Füllstoffe, Fasern, Hologramme, etc., wie sie in der Polymerchemie für die Herstellung von Folien üblich sind, zugesetzt werden. Bevorzugt weist das Material für den Folienzuschnitt Additive in einer Menge in einem Bereich von 1 bis 40 Gew.-%, bevorzugt 2 bis 30 Gew.-%, mehr bevorzugt 5 bis 25 Gew.-%, besonders bevorzugt 10 bis 20 Gew.-%, bezogen auf die Gesamtmasse des Folienzuschnitts.

In einer bevorzugten Ausführungsform des Verfahrens weist der Folienzuschnitt eine Dicke in einem Bereich von 30 bis 1000 µm, bevorzugt von 40 bis 500 µm, besonders bevorzugt von 50 bis 200 µm auf.

Der Folienzuschnitt kann dabei mehrere Folienlagen aufweisen. Bevorzugt wird die Folie, aus der der Folienzuschnitt zugeschnitten wurde durch Lamination oder Extrusion, bevorzugt Co-Extrusion hergestellt.

Ein weiterer Aspekt der Erfindung betrifft eine Verwendung des erfindungsgemäßen Vorläufers für ein dreidimensionales Bauteil oder das erfindungsgemäße Bauteil als Bestandteil eines Automobil, insbesondere als Frontmodul, Scheinwerferapplikationen, Heckbauteile, Rückleuchten oder einer Kombination aus mindestens zwei hiervon.

Das erfindungsgemäße Verfahren ermöglicht eine präzise und reproduzierbare Positionierung des Folienzuschnitts mittels federgestützter Positionierungshilfe(n). Die spezielle Geometrie der Werkzeugteile W1 und W2 mit triaxial konvex oder konkav geformten Oberflächen und die gezielte Kontaktierung und Nicht-Kontaktierung zwischen Folie und Werkzeug am Erhebungspunkt gewährleistet eine kontrollierte Verformung ohne lokale Überdehnung. Dadurch kann eine geringe Neigung zur Faltenbildung in den Randbereichen des Folienzuschnitts sowie eine gleichmäßige Wandstärkenverteilung erreicht werden. Durch die definierte Temperaturführung im Bereich der Vicat-Temperatur wird eine gleichmäßige Verformung erreicht sowie eine kontrollierte Rückstellung des Materials. Durch das erfindungsgemäße Verfahren ist eine signifikante Reduzierung des Folienabfalls ermöglicht unter verringertem Materialeinsatz, da geringere oder keine Klemmflächen erforderlich sind. Dadurch ist das Verfahren kosteneffizienter als herkömmliche Produktionsprozesse wie "High pressure forming" oder Tiefziehprozesse, wie sie im einleitenden Teil bereits beschrieben wurden, da in beiden Fällen ein Klemmrahmen benötigt wird, um den Folienzuschnitt zu fixieren.

Ein weiterer Aspekt der Erfindung betrifft ein Verformungswerkzeug VW zur Herstellung eines Vorläufers für ein dreidimensionales Bauteil, umfassend:
I. ein erstes Werkzeugteil W1 und ein zweites Werkzeugteil W2, die jeweils eine zumindest zum Teil gebogene Oberfläche WO1, WO2 aufweisen, wobei die Oberflächen WO1, WO2 komplementär zueinander ausgestaltet sind und jeweils zumindest in einem Bereich ihrer gebogenen Oberfläche eine triaxial konvex oder konkav geformte Oberfläche mit mindestens einem Erhebungspunkt aufspannen;
II. optional mindestens eine Fixierungsvorrichtung FV, die zwischen dem ersten Werkzeugteil W1 und dem zweiten Werkzeugteil W2 angeordnet ist und zur Aufnahme mindestens einer Positionierungshilfe PH eines Folienzuschnitts ausgestaltet ist; wobei die Fixierungsvorrichtung FV bevorzugt in Form mindestens eines versenkbaren Stifts bevorzugt mit einer Feder ausgestaltet ist;
III. wobei die Werkzeugteile W1 und W2 optional beheizbar ausgestaltet sind;
wobei die Werkzeugteile W1 und W2 bevorzugt so ausgestaltet sind, dass ein zwischen ihnen angeordneter Folienzuschnitt bei maximaler Kontaktierung an mindestens der Hälfte des Umfangs der Außenkanten der Werkzeugteile W1, W2 in direktem Kontakt mit diesen steht und an dem mindestens einen Erhebungspunkt ein Spalt von 0,05 bis 0,5 mm zwischen den Werkzeugteilen W1, W2 verbleibt.

Die gebogenen Oberflächen des ersten Werkzeugteils W1 und des zweiten Werkzeugteils W2 können mittels jeden Verfahrens hergestellt werden, das der Fachmann hierfür auswählen würde. Bevorzugt werden die gebogenen Oberflächen durch CNC-Fräsen aus geeigneten Metallblöcken, bevorzugt Werkzeugstahl oder Aluminium, hergestellt. Bevorzugt lasst sich die triaxial geformte Oberfläche mittels 3D-CAD-Software modellieren, wobei der Erhebungspunkt als höchste Stelle der konvexen Form bzw. tiefste Stelle der konkaven Form definiert wird.

Bevorzugt wird die Oberfläche des Werkzeugteils 1 und des Werkzeugteils W2 durch Schleifen und Polieren auf eine gewünschte Oberflächenrauheit eingestellt. Bevorzugt weisen die Oberflächen des Werkzeugteils 1 und des Werkzeugteils W2 eine Rauheit in einem Bereich von Ra = 0,8 bis 1,6 µm auf. Dies ist insbesondere vorteilhaft, um ein optimales Gleiten des Folienzuschnitts zu gewährleisten.

Die Oberfläche des ersten Werkzeugteils W1 und des zweiten Werkzeugteils W2 können zusätzlich beschichtet sein. Eine Oberflächenbeschichtung, wie DLC (diamond-like carbon) Beschichtung oder Hartchrom kann aufgebracht werden, um Verschleiß zu minimieren und Gleiteigenschaften weiterhin zu verbessern.

Die Fixierungsvorrichtung kann jede Gestalt aufweisen und aus jedem Material bestehen, den der Fachmann für die Fixierung des Folienzuschnitts während des Verformungsprozesses auswählen würde. Bevorzugt ist die Fixierungsvorrichtung in Form von Stiften ausgestaltet, die bevorzugt in der Oberfläche des Werkzeugteils W1 versenkbar angeordnet sind. Der mindestens eine Stift ist bevorzugt aus gehärtetem Stahl oder Aluminium gefertigt. Bevorzugt weist der mindestens eine Stift einen Durchmesser von 1 bis 10 mm, mehr bevorzugt von 2 bis 8 mm, besonders bevorzugt von 3 bis 5 mm auf. Der mindestens eine Stift ist bevorzugt mittels einer Feder gelagert, sodass er nach dem Zusammenpressen der Werkzeugteile W1 und W2 wieder in seine ursprüngliche Position aus der Oberfläche des Werkzeugteils W1 ausgefahren wird. Die Feder sollte bevorzugt so dimensioniert sein, dass sie eine Kraft von etwa 5 bis 15 N/m² als Rückstellkraft ausüben kann, aber eine Kraft von mehr als 50 N/m² durch das Werkzeugteil W2 aushalten kann. Zusätzlich kann ein pneumatisches oder hydraulisches System implementiert werden, um die Stifte synchron zu versenken. Die Positionierung der Stifte sollte bevorzugt so gewählt werden, dass sie außerhalb der Hauptverformungszonen liegen. Weiterhin kann eine Führungsbuchse mit Dichtung das Eindringen von Verschmutzungen verhindern. Bevorzugt weist die Fixierungsvorrichtung FV mindestens zwei Stifte, bevorzugt drei Stifte, besonders bevorzugt vier Stifte auf, die an zwei, drei oder vier Punkten auf den Außenflächen des Werkzeugteils W1 mit möglichst großem Abstand angeordnet sind. Der Abstand der Stifte wird möglichst so gewählt, dass der Folienzuschnitt ohne weitere Stütze oberhalb des Werkzeugteils W1 gehalten wird und in seiner Position so fixiert wird, dass er bei Berührung mit den Werkzeugteilen W1 und W2 nicht aus seiner gewünschten Position verrutscht.

Die Werkzeugteile W1 und W2 sind optional beheizbar ausgestaltet, um den Folienzuschnitt während des Verformungsprozesses auf die gewünschte Temperatur zu bringen. Alternativ kann der Folienzuschnitt auch außerhalb oder auf der Fixierungsvorrichtung mittels eines Heizmittels, wie einem Heißluftfön, auf die gewünschte Temperatur gebracht werden. Die Beheizung innerhalb der Werkzeugteile W1 und W2 kann durch in diese eingebrachte Heizpatronen oder ein Temperiersystem auf Öl Basis erfolgen. Es können zusätzlich Temperaturmessfühler in die oder am Rand der Werkzeugteile W1 und W2 angebracht werden.

Diese spezielle Konstruktion des Verformungswerkzeuges VW ermöglicht eine präzise und kontrollierte Verformung des Folienzuschnitts zwischen den Werkzeugteilen W1 und W2 ohne lokale Überdehnung, was zu einer gleichmäßigen Wandstärkenverteilung und geringer Faltenbildung in den Randbereichen führt.

Wie bereits zuvor beschrieben, kann das herzustellende dreidimensionale Bauteil und damit auch das Werkzeugteil W1 mehr als einen Erhebungspunkt aufweisen. Um den Folienzuschnitt jedoch nicht übermäßig Spannungen auszusetzen, weist bevorzugt jede Neigung der Oberfläche OW1 des Werkzeugteils W1 gegenüber der über ihr in Schritt II**.** positionierten Folienzuschnittes einen Winkel von ≤ 90°, bevorzugt von ≤ 80°, mehr bevorzugt von ≤ 70°, besonders bevorzugt von ≤ 60° auf. Das bedeutet, dass der Folienzuschnitt an keiner Stelle während des Verformungsprozesses ≥ 100°, bevorzugt von ≥ 85°, besonders bevorzugt von ≥ 70° gebogen wird.

Weist das dreidimensionale Bauteil eine Geometrie mit zwei Außenkanten in einer Ebene auf, so wird der mindestens eine Erhebungspunkt von dieser Ebene aus ermittelt.

Der mindestens eine Erhebungspunkt weist gegenüber der Ebene, die von mindestens zwei Außenkanten des Werkzeugteils W1 aufgespannt wird, bevorzugt einen Abstand von mindestens 1/200, bevorzugt 1/150, besonders bevorzugt 1/100, ganz besonders bevorzugt 1/50 oder in einem Bereich von 1/500 bis 1/10 des Umfangs des Folienzuschnitts auf. Bevorzugt wird die Ebene von den zwei niedrigsten Außenkanten des Werkzeugteils W1 aufgespannt. Bevorzugt liegen sich die beiden Außenkanten gegenüber.

Bevorzugt erhebt sich der mindestens eine Erhebungspunkt in einem Bereich von 1 mm bis 50 mm, von 2 bis 40 mm, mehr bevorzugt von 3 bis 30 mm, besonders bevorzugt von 4 bis 20 mm gegenüber dem niedrigsten Punkt, den das dreidimensionale Bauteil aufweist, wenn es mit seinen Außenkanten flach auf den Boden gelegt wird.

Das Werkzeugteil W2 kann mittels jedem Mittel auf das Werkzeugteil W1 bewegt werden. Bevorzugt wird das Werkzeugteil W2 mittels eines Motors, hydraulisch oder pneumatisch auf das Werkzeugteil W1 zubewegt. Bevorzugt wird das Werkzeugteil W2 mittels eines Servomotors mit dem Folienzuschnitt, zumindest im Außenbereich in Kontakt gebracht.

Bei der Bewegung des Werkzeugteils W2 auf das Werkzeugteil W1 zu wird langsam die Fixierungsvorrichtung FV, bevorzugt in Form mindestens eines Stiftes, in das Werkzeugteil W1 versenkt.

### Bevorzugte Ausführungsbeispiele

Die Erfindung wird nachfolgend anhand von Ausführungsbeispielen näher erläutert. Die beschriebenen Ausführungsformen stellen lediglich Beispiele für die vielfältigen Möglichkeiten der Ausgestaltung der Erfindung dar.

### Ausführungsbeispiel 1: Herstellung eines Vorläufers eines Automobilbauteils

In diesem Ausführungsbeispiel wurde ein Vorläufer für ein dekoratives Automobilbauteil mit komplexer dreidimensionaler Geometrie hergestellt.

### Materialspezifikation:

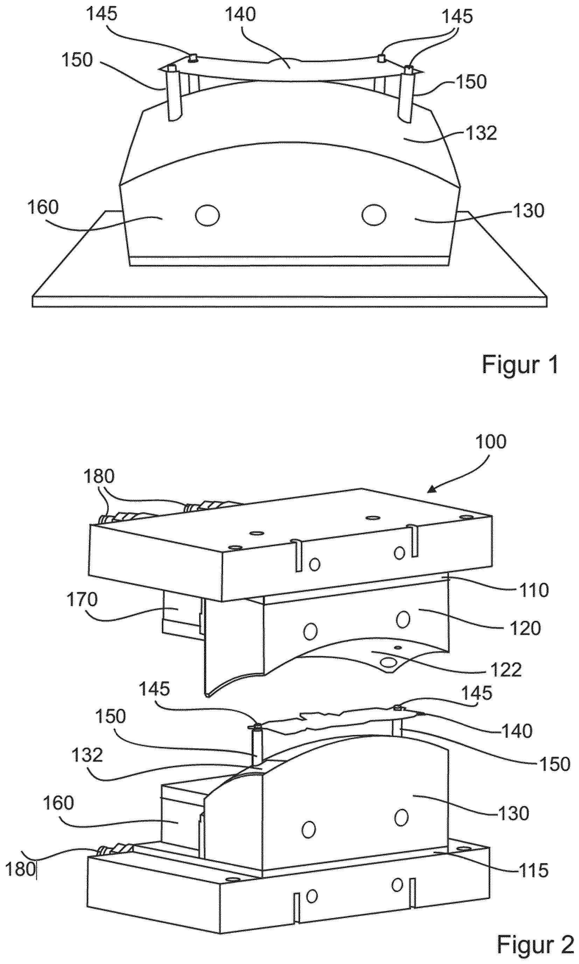

- Folienmaterial für den zu verformenden Folienzuschnitt: Polycarbonat (PC) - auf Basis von Makrofol^{®} DE 1-4 von Covestro Deutschland AG, wobei die 1er Seite die Oberfläche O1 und damit beim Verformen in Richtung der Oberfläche WO1 weist und die 4er Seite des Folienzuschnitts die Oberfläche O2 bildet
- Foliendicke betrug: 375 µm
- Foliengeometrie des Folienzuschnitts: rechteckig mit einer Länge von 20 cm und einer Breite von 14 cm
- Dekorierung des Folienzuschnitts: mittels Siebdruck bedruckte Oberfläche auf O2 des Folienzuschnitts, (Farbstoff: Noriphan^{®} HTR N 956 schwarz von der Firma Pröll GmbH, Deutschland)
- Positionierungshilfen: 4 Laschen an den Ecken des Folienzuschnitts mit ovalen Löchern mit einem Durchmesser von 6 x 10 mm
- Geometrie der Werkzeugteile W1 und W2 entsprechend der in Figur 1 oder 2 abgebildeten Geometrie des Werkzeugteils 1 130 und dem komplementär ausgeformten Werkzeugteils W2 (in Fig. 1 nicht gezeigt) mit einem Spalt von 0,08 mm zu Werkzeugteil 2 120 und einem Erhebungspunkt 200 von 30 mm gegenüber der Ebene gebildet aus den Punkten, die aus den Mittelpunkten der Stifte 150 in Figur 1 oder 2 gebildet wurden.

### Verfahrensparameter:

- Erwärmungstemperatur: Vicat-Temperatur ± 5°C
- Erwärmungsdauer: 30 Sekunden
- Spaltmaß am Erhebungspunkt: 0,08 mm
- Zusammenpressen der Werkzeugteile W1 und W2: ein Servomotor mit einer Presskraft von maximal 50 N/m², wobei eine Kraft von 30 N/m² angewendet wurde
- Rückstellungswert: 15%

Der Rückstellungswert wurde anhand der Auslenkung der Folienränder in Bezug auf den Erhebungspunkt des Werkzeugteils 1 ermittelt. Der Erhebungspunkt des Werkzeugteils 1 betrug 30 mm, bezogen auf die Ebene, die sich aus den Mittelpunkten der vier versenkbaren Stifte als Fixierungshilfen ergab, die deckungsgleich ist mit der Ebene, die sich aus den 4 Mittelpunkten der vier Positionierungshilfen ergab, wenn der Folienzuschnitt zwischen den beiden Werkzeugteilen W1 und W2 zusammengepresst war. Nach dem beschriebenen Verformungsprozess betrug die Verformung des Folienzuschnitts 25,5 mm, bezogen auf die Ebene, die sich aus den Mittelpunkten der vier Positionierungshilfen ergab.

### Ausführungsbeispiel 2: Herstellung eines Automobilbauteils aus dem Vorläufer aus Beispiel 1

Dieses Beispiel beschreibt die Herstellung eines Automobilbauteils aus dem Vorläufer aus Ausführungsbeispiel 1, jedoch mit einer Dicke des Folienzuschnitts von 500 µm mit nachfolgendem Überspritzen mit PC.

Hinterspritzprozess: für die Herstellung eines erfindungsgemäßen dreidimensionalen Bauteils wurden folgende Schritte durchgeführt:
1. Verformung des Folienzuschnitts gemäß Ausführungsbeispiel 1
2. Transfer des verformten Folienzuschnitts in ein Spritzgießwerkzeug mit der endgültigen Geometrie des dreidimensionalen Bauteils
3. Fixierung des Folienzuschnitts mittels der Positionierungshilfen an Fixierungshilfen am Spritzgusswerkzeug
4. Hinterspritzen des Folienzuschnitts mit Polycarbonat PC (Makrolon^{®} AG2477 von Covestro Deutschland AG) bei einer Massetemperatur von 280 °C und einem Werkzeugtemperatur von 70 °C, mit einer Fülldauer des Spritzgusswerkzeugs von 2 Sekunden
5. Entformung des fertigen Bauteils aus dem Spritzgusswerkzeug

Das dreidimensionale Bauteil wies seine endgültige Form nach diesem Hinterspritzprozess auf, mit 6 mm Abstand des Erhebungspunktes im mittleren Bereich des Folienzuschnitts zu der Ebene, die sich aus den Mittelpunkten der Positionierungshilfen ergaben.

### Kurze Beschreibung der Figuren

Die Erfindungwird nachfolgend anhand von schematischen Zeichnungen näher erläutert. Es zeigen:
Fig. 1: Eine seitliche Ansicht eines Werkzeugteils W1 eines Verformungswerkzeugs VW oberhalb dessen konvexer Oberfläche ein Folienzuschnitt positioniert ist.
Fig. 2: Eine Schnittdarstellung des Verformungswerkzeugs VW mit a) erstem Werkzeugteil W1 b) zweitem Werkzeugteil W2 c) Fixierungsvorrichtung FV d) Positionierungshilfen PH
Fig. 3: Eine Schnittdarstellung des Verformungsprozesses mit geschlossenen Werkzeugteilen W1 und W2 und verformtem Folienzuschnitt.
Fig. 4: Eine schematische Schnittdarstellung einer S-förmigen Ausgestaltung der Werkzeugteile W1 und W2
Fig. 5: Eine schematische Darstellung des Aufeinandertreffens der S-förmigen Oberflächen der Werkzeugteile W1 und W2 aus Figur 4

### Ausführliche Beschreibung der Figuren

Fig. 1 zeigt eine seitliche schematische Ansicht eines ersten Werkzeugteils W1 130 eines erfindungsgemäßen Verformungswerzeugs VW 100. Ein Folienzuschnitt 140 ist mit seinen Positionierungshilfen PH 145 auf Fixierungsvorrichtungen 150, in Form von versenkbaren federgestützten Stiften oberhalb der konkav gewölbten Oberfläche 132 des Werkzeugteils W1 130 positioniert und gegen seitliches und senkrechtes Verschieben und Verrutschen fixiert und gesichert. Die in diesem Fall vier Positionierungshilfen PH 145 sind als Löcher ausgeführt und symmetrisch am Rand des Folienzuschnitts 140 angeordnet. Die Positionierungshilfen PH 145 sind nach dem Verformungsprozess leicht vom Folienzuschnitt 140 abtrennbar. Die erste Oberfläche O1 und oder die zweite Oberfläche O2 des Folienzuschnitts 140 kann bzw. können optional dekoriert oder funktionalisiert sein. Bevorzugt weist die Oberfläche O1 eine Dekoration in Form eines Aufdrucks auf.

Fig. 2 zeigt eine Schnittdarstellung des erfindungsgemäßen Verformungswerkzeugs VW 100. Das erste Werkzeugteil W1 130 weist eine konvexe Oberfläche 132 auf, während das zweite Werkzeugteil W2 120 eine komplementäre konkave Form seiner Oberfläche 122 besitzt. Zwischen den Werkzeugteilen W1 130 und W2 120 ist die Fixierungsvorrichtung FV 150 in Form von federgestützten, versenkbaren Stiften, angeordnet, die Aufnahmen für die Positionierungshilfen PH 145 aufweist. Die Werkzeugteile W1 130 und W2 120 befinden sich gerade im Grundzustand des Verformwerkzeugs VW 100, in dem der Folienzuschnitt 140 einfach zwischen den Werkzeugteilen W1 130 und W2 120 positioniert werden kann, ohne bereits Kontakt mit diesen zu erlangen. Die beiden Werkzeugteile W1 130 und W2 120 sind beispielsweise mittels elektrischer Heizpatronen 160 und 170 auf die gewünschte Temperatur bis 250 °C aufheizbar, da sie aus Aluminium bestehen. Das Verformungswerkzeug VW 100 kann über Kühlpatten 110 und 115 gegenüber umgebenden Gegenständen oder Werkzeugteilen gekühlt werden, indem kalte Flüssigkeit über die Stutzen 180 in die Kühlplatten 110 und 115 eingeleitet wird.

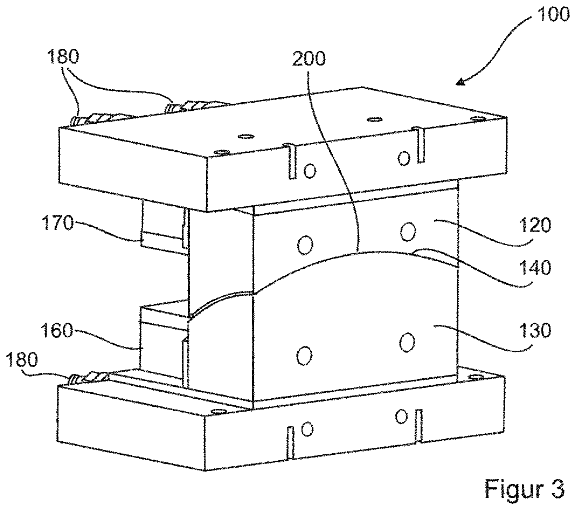

Fig. 3 veranschaulicht das Verformungswerkzeug VW 100 in der gleichen Perspektive wie in Fig. 2, aber während des Verformungsprozesses, also im geschlossenen Zustand des Verformungswerkzeug VW 100. Besonders gut erkennbar ist hier die kontrollierte Kontaktierung zwischen Folienzuschnitt 140 und Werkzeugteilen W1 130 und W2 120, die maximal aufeinandergepresst werden, wobei im Bereich des Erhebungspunkts 200 ein definierter Spalt verbleibt, der hier nicht dargestellt werden kann, da er zu dünn für eine Visualisierung ist.

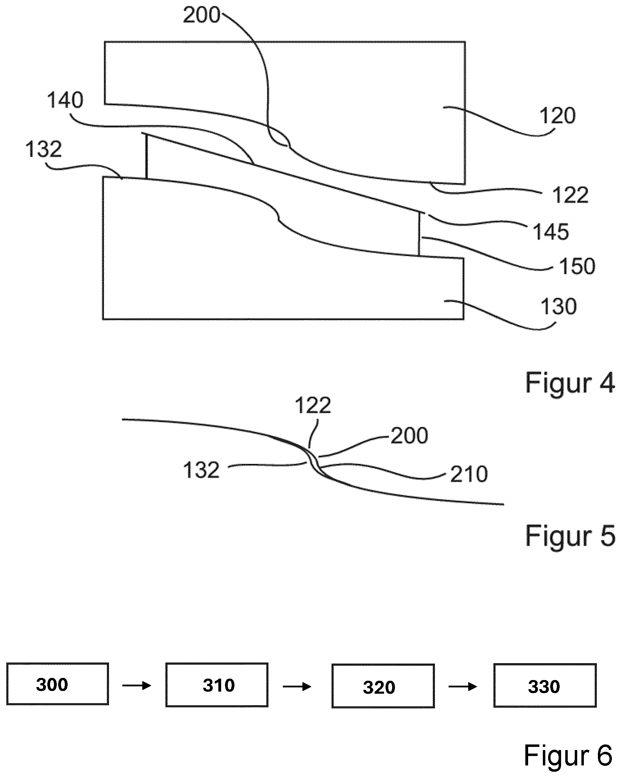

Fig. 4 stellt eine weitere Profilform der Werkzeugteile W1 130 und W2 120 dar, wobei die Oberflächen WO1 132 und WO2 122 beim Aufeinanderlegen der Werkzeugteile W1 130 und W2 120 einen Spalt bilden, wie in Figur 5 dargestellt. Der Spalt 210 befindet sich am Erhebungspunkt 200, wie in Figur 5 dargestellt, welcher durch den Übergang der konkaven in die konvexe Form der Oberflächen OW1 132 und OW2 122 definiert wird.

Zwischen die Oberflächen 122 und 132 der Werkzeugteile W1 und W2 ist ein Folienzuschnitt 140 mittels Positionierungshilfen PH 145 auf Fixierungsvorrichtungen 150 des Werkzeugteils W1 130 fixiert.

In Fig. 5 ist schematisch das Aufeinandertreffen der Oberflächen OW1 132 des ersten Werkzeugteils W1 130 und der Oberfläche OW1 122 des zweiten Werkzeugteils W2 aus Figur 4 dargestellt, wobei der Erhebungspunkt 200 sich im Übergang des konkaven zum konvexen Teil der Oberflächen OW1 und OW2 befindet und dort ein Spalt 210 zwischen den beiden Werkzeugteilen W1 130 und W2 120 gebildet wird.

In Fig. 6 wird der erfindungsgemäße Verformungsprozess graphisch gezeigt, wobei in Schritt I. 300 ein Folienzuschnitt einer Polymerfolie bereitgestellt, in Schritt II**.** 310 der Folienzuschnitt mit Hilfe von Positionierungshilfen auf Fixierungshilfen eines ersten, auf ca. 145 °C beheizten Werkzeugteils W1 einer Verformungswerkzeug VW positioniert. In Schritt III. 320 wird der Folienzuschnitt mit einem zweiten auf 145 °C beheizten Werkzeugteil W2 für ca. 30 Sekunden kontaktiert und auf das erste Werkzeugteil W1 gepresst, sodass er verformt wird. Nach Auseinanderfahren der Werkzeugteile W1 und W2 wird der Folienzuschnitt in Schritt IV. 330 aus dem Verformungswerkzeug VW entnommen.

## Patentansprüche

1. Verfahren zur Herstellung eines Vorläufers für ein dreidimensionales Bauteil, umfassend mindestens die folgenden Schritte:
I. Bereitstellen eines optional dekorierten oder funktionalisierten Folienzuschnitts mit einer ersten Oberfläche O1 und einer der ersten Oberfläche O1 gegenüberliegenden zweiten Oberfläche O2, wobei der Folienzuschnitt mindestens eine Positionierungshilfe PH aufweist;
II. Positionieren des Folienzuschnitts mittels der Positionierungshilfe PH auf mindestens eine Fixierungsvorrichtung FV eines beheizbaren Verformungswerkzeugs VW, wobei die Fixierungsvorrichtung FV zwischen einer ersten Oberfläche WO1 eines ersten Werkzeugteils W1 und einer zweiten Oberfläche WO2 eines zweiten Werkzeugteils W2 des Verformungswerkzeuges VW angeordnet ist, wobei das erste Werkzeugteil W1 und das zweite Werkzeugteil W2 jeweils eine zum Teil gebogene Oberflächen WO1, WO2 aufweisen, wobei die Oberflächen WO1 und WO2 in ihrer Form komplementär zueinander ausgestaltet sind und jeweils zumindest in einem Bereich ihrer gebogenen Oberfläche eine triaxial konvex oder konkav geformte Oberfläche mit mindestens einem Erhebungspunkt aufspannen;
III. Kontaktieren der zweiten Oberfläche O2 des Folienzuschnitts mit der gebogenen Oberfläche WO2 des zweiten beheizbaren Werkzeugteil W2, die eine zur gebogenen Oberfläche WO1 des ersten Werkzeugteils W1 komplementäre konkave oder konvexe Form aufweist, sodass der Folienzuschnitt zwischen den beiden Werkzeugteilen W1 und W2 so eingeklemmt wird, dass er über die gesamte Fläche, die mit den Oberflächen WO1 und WO2 der Werkzeugteile W1 und W2 in Berührung kommt, auf eine Temperatur in einem Bereich ≤ 20°C unterhalb der Vicat-Temperatur des Folienmaterials bis ≤ Glasübergangstemperatur und dabei zum Vorläufer des dreidimensionalen Bauteils verformt wird; und
IV. Entnahme des Vorläufers aus Schritt III. aus dem Verformungswerkzeug VW;
wobei das Verformungswerkzeug VW, insbesondere die Werkzeugteile W1 und W2, derart ausgestaltet ist, dass der Folienzuschnitt bei maximaler Kontaktierung der zweiten Oberfläche WO2 in Schritt III. an mindestens der Hälfte des Umfangs der Außenkanten der Werkzeugteile W1 und W2 in direktem Kontakt mit diesen steht und mindestens an dem mindestens einen Erhebungspunkt zu mindestens einem der Werkzeugteile W1 oder W2 keinen Kontakt hat.

2. Das Verfahren, gemäß Anspruch 1, wobei sich mindestens an dem mindestens einen Erhebungspunkt zwischen dem ersten Werkzeugteil W1 und dem zweiten Werkzeugteil W2 ein Spalt von 0,05 bis 0,5 mm befindet, wenn die beiden Werkzeugteile W1 und W2 funktionsgemäß aufeinandergelegt werden.

3. Das Verfahren, gemäß Anspruch 1 oder 2, wobei das Werkzeugteil W1 die gleiche Oberflächenkrümmung aufweist wie das dreidimensionale Bauteil und wobei der Vorläufer des dreidimensionalen Bauteils nach Entnahme des Vorläufers aus dem Verformungswerkzeugs VW in Schritt IV. und abkühlen auf Raumtemperatur eine Rückstellung in seine ursprüngliche Form vor Schritt I. um einen Betrag in einem Bereich von 5 bis 30 %, bevorzugt von 7 bis 25 %, besonders bevorzugt von 10 bis 20 %, bezogen auf die Geometrie des Werkzeugteils W1, insbesondere bezogen auf die Neigung der Fläche der Außenkanten des W1 mit der größten Neigung.

4. Das Verfahren gemäß einem der vorhergehenden Ansprüche, wobei der mindestens eine Erhebungspunkt gegenüber der Ebene, die von mindestens zwei Außenkanten des Werkzeugteils W1 aufgespannt wird, einen Abstand von mindestens 1/200, bevorzugt 1/150, besonders bevorzugt 1/100, ganz besonders bevorzugt 1/50 oder in einem Bereich von 1/500 bis 1/10 des Umfangs des Folienzuschnitts aufweist.

5. Das Verfahren gemäß einem der vorhergehenden Ansprüche, wobei sich der mindestens eine Erhebungspunkt in einem Bereich von 1 mm bis 50 mm, von 2 bis 40 mm, mehr bevorzugt von 3 bis 30 mm, besonders bevorzugt von 4 bis 20 mm gegenüber dem niedrigsten Punkt erhebt, den das dreidimensionale Bauteil aufweist, wenn es mit seinen Außenkanten flach auf den Boden gelegt wird.

6. Das Verfahren gemäß einem der vorhergehenden Ansprüche, wobei das Werkzeugteil W2 mittels eines Servomotors mit dem Folienzuschnitt, zumindest im Außenbereich in Kontakt gebracht wird.

7. Das Verfahren gemäß einem der vorhergehenden Ansprüche, wobei die Fixierungsvorrichtung FV mindestens zwei Stifte, bevorzugt drei Stifte, besonders bevorzugt vier Stifte aufweist, die an zwei, drei oder vier Punkten auf den Außenflächen des Werkzeugteils W1 mit möglichst großem Abstand angeordnet sind.

8. Das Verfahren gemäß einem der vorhergehenden Ansprüche, wobei der Folienzuschnitt im Arbeitszustand des Verformungswerkzeugs VW und später im Bauteil mindestens auf einer Seite des Folienzuschnitts eine Neigung ausgehend vom Rand bis zum mindestens einen Erhebungspunkt in einem Bereich von 5 bis 30°, bevorzugt von 7 bis 25°, besonders bevorzugt von 10 bis 20° aufweist.

9. Das Verfahren gemäß einem der vorstehenden Ansprüche, wobei die Außenkanten des Werkzeugteils W1 und bevorzugt auch des Werkzeugteils W2 eine Form aufweisen ausgewählt aus der Gruppe bestehend aus einem Kreis, einem Oval, einem Parallelogramm oder einer Kombination aus mindestens zwei hiervon.

10. Das Verfahren gemäß einem der vorhergehenden Ansprüche, wobei die Werkzeugteile W1 und W2 eine Oberfläche mit einer Prägung aufweisen.

11. Das Verfahren gemäß einem der vorstehenden Ansprüche, wobei der Folienzuschnitt ein Material enthält, das zu mindestens 50 Gew.-%, bevorzugt zu mindestens 70 Gew.-%, besonders bevorzugt zu mindestens 90 Gew.-% ein Polymer enthält, das ausgewählt ist aus der Gruppe bestehende aus einem Polycarbonat PC, einem Co-Polycarbonat Co-PC, einem Polyester PE, einem Co-Polyester Co-PE, einem Polyurethan, einem Acrylnitril-Butadien-Styrol-Copolymer ABS, einem Polymethylmethacrylat PMMA oder einer Mischung oder einem Blend aus mindestens zwei hiervon.

12. Das Verfahren gemäß einem der vorhergehenden Ansprüche, wobei der Folienzuschnitt eine Dicke in einem Bereich von 30 bis 1000 µm, bevorzugt von 40 bis 500 µm, besonders bevorzugt von 50 bis 200 µm aufweist.

13. Das Verfahren gemäß einem der vorstehenden Ansprüche, wobei der geformte Folienzuschnitt mindestens von einer Seite mit einem Kunststoff hinter- und/oder überspritzt wird, unter Erhalt des dreidimensionalen Bauteils.

14. Das Verfahren gemäß dem vorhergehenden Anspruch, wobei während des Hinter- oder Überspritzvorgangs der Folienzuschnitt mit seiner mindestens einen Positionierungshilfe PH in oder an der Form eines Spritzguss Werkzeugs fixiert wird.

15. Eine Verwendung eines Vorläufers eines dreidimensionalen Bauteils hergestellt gemäß einem der Ansprüche 1 bis 12 oder eines dreidimensionalen Bauteils, hergestellt gemäß einem der Ansprüche 13 oder 14 als Bestandteil eines Automobils, insbesondere als Frontmodul, Scheinwerferapplikationen, Heckbauteile, Rückleuchten oder einer Kombination aus mindestens zwei hiervon.

16. Ein Verformungswerkzeug VW zur Herstellung eines Vorläufers für ein dreidimensionales Bauteil, umfassend:
I. ein erstes Werkzeugteil W1 und ein zweites Werkzeugteil W2, die jeweils eine zumindest zum Teil gebogene Oberfläche WO1, WO2 aufweisen, wobei die Oberflächen WO1, WO2 komplementär zueinander ausgestaltet sind und jeweils zumindest in einem Bereich ihrer gebogenen Oberfläche eine triaxial konvex oder konkav geformte Oberfläche mit mindestens einem Erhebungspunkt aufspannen;
II. optional mindestens eine Fixierungsvorrichtung FV, die zwischen dem ersten Werkzeugteil W1 und dem zweiten Werkzeugteil W2 angeordnet ist und zur Aufnahme mindestens einer Positionierungshilfe PH eines Folienzuschnitts ausgestaltet ist; wobei die Fixierungsvorrichtung FV bevorzugt in Form mindestens eines versenkbaren Stifts bevorzugt mit einer Feder ausgestaltet ist;
III. wobei die Werkzeugteile W1, W2 optional beheizbar ausgestaltet sind;
IV. wobei die Werkzeugteile W1, W2 bevorzugt so ausgestaltet sind, dass ein zwischen ihnen angeordneter Folienzuschnitt bei maximaler Kontaktierung an mindestens der Hälfte des Umfangs der Außenkanten der Werkzeugteile W1, W2 in direktem Kontakt mit diesen steht und an dem mindestens einen Erhebungspunkt ein Spalt von 0,05 bis 0,5 mm zwischen den Werkzeugteilen W1, W2 verbleibt.
